# EUROPEAN PATENT APPLICATION

(11) **EP 4 564 472 A1**
(43) Date of publication of application: **04.06.2025**
(21) Application number: 23921646.8
(22) Date of filing: 13.02.2023
(51) Int. Cl.: H01M 4/36, H01M 4/583

(54) **SECONDARY BATTERY AND ELECTRICAL DEVICE**

(71) Applicant: Contemporary Amperex Technology (Hong Kong) Limited, Central, Hong Kong (CN)
(72) Inventor: LIU, Liangbin, Ningde, Fujian 352100 (CN); WANG, Jiazheng, Ningde, Fujian 352100 (CN); ZENG, Chen, Ningde, Fujian 352100 (CN); KANG, Meng, Ningde, Fujian 352100 (CN); LV, Zijian, Ningde, Fujian 352100 (CN); DENG, Jingxian, Ningde, Fujian 352100 (CN); SU, Yingwei, Ningde, Fujian 352100 (CN)
(74) Representative: Jacob, Reuben Ellis
(86) International application number: PCT/CN2023/075703
(87) International publication number: WO 2024/168473

(57) **Abstract**

The present application provides a secondary battery and an electrical device. The secondary battery comprises a negative electrode sheet; the negative electrode sheet comprises a negative electrode current collector and a negative electrode film layer provided on at least one surface of the negative electrode current collector and comprising a negative electrode active material; the negative electrode active material comprises a carbon-based material and a silicon-based material; the carbon-based material comprises secondary particles formed by aggregation of primary particles; the silicon-based material comprises secondary particles formed by aggregation of primary particles.

## Description

### TECHNICAL FIELD

This application relates to the field of battery technologies, and specifically, to a secondary battery and an electric apparatus.

### BACKGROUND

In recent years, secondary batteries have been widely used in energy storage power supply systems such as hydroelectric, thermal, wind, and solar power plants, and many other fields including electric tools, electric bicycles, electric motorcycles, electric vehicles, military equipment, and aerospace. With the increasingly wide application range of secondary batteries, severe challenges have been posed to the performance of secondary batteries. For example, secondary batteries are required to achieve various performance such as high energy density and good rate performance. However, the current problem is that an increase in energy density of secondary batteries often affects the rate performance of the secondary batteries.

### SUMMARY

This application is developed in view of the above technical problem and is intended to provide a secondary battery and an electric apparatus, so as to make the secondary battery achieve good rate performance while maintaining high energy density.

According to a first aspect, this application provides a secondary battery including a negative electrode plate, where the negative electrode plate includes a negative electrode current collector, and a negative electrode film layer that is provided on at least one surface of the negative electrode current collector and includes a negative electrode active material; the negative electrode active material includes a carbon-based material and a silicon-based material; the carbon-based material includes secondary particles formed by aggregation of primary particles; and the silicon-based material includes secondary particles formed by aggregation of primary particles.

In the negative electrode active material of this application, both the carbon-based material and the silicon-based material include secondary particles formed by aggregation of primary particles, thereby increasing ion intercalation channels and reducing impedance of a negative electrode-electrolyte interface, such that the secondary battery can achieve both high energy density and better rate performance.

In any embodiment of this application, a particle size by volume Dᵥ50 of the carbon-based material is greater than a particle size by volume Dᵥ50 of the silicon-based material. The particle size by volume Dᵥ50 of the carbon-based material being greater than the particle size by volume Dᵥ50 of the silicon-based material can reduce an adverse impact of large silicon-based material particles on the rate performance of the secondary battery. In addition, the collocation of large particles and small particles also helps to increase the compacted density of the negative electrode plate, thereby increasing the energy density of the secondary battery.

In any embodiment of this application, a quantity percentage of the secondary particles in the carbon-based material is greater than a quantity percentage of the secondary particles in the silicon-based material. The quantity percentage of the secondary particles in the carbon-based material being greater than the quantity percentage of the secondary particles in the silicon-based material can balance the cycling performance and energy density of the secondary battery.

In any embodiment of this application, the quantity percentage of the secondary particles in the carbon-based material is ≥ 70%, optionally 75% to 90%. When the carbon-based material includes a proper proportion of secondary particles, the ion intercalation channels in the negative electrode film layer can be increased, and the impedance of the negative electrode-electrolyte interface can be reduced, thereby further optimizing the rate performance of the secondary battery. In addition, battery polarization can also be reduced, thereby allowing the secondary battery to have good cycling performance.

In any embodiment of this application, the quantity percentage of the secondary particles in the silicon-based material is ≥ 55%, optionally 60% to 85%. When the silicon-based material includes a proper proportion of secondary particles, the ion intercalation channels in the negative electrode film layer can be increased, and the impedance of the negative electrode-electrolyte interface can be reduced, thereby further optimizing the rate performance of the secondary battery. In addition, battery polarization can also be reduced, thereby allowing the secondary battery to have good cycling performance.

In any embodiment of this application, a porosity of the silicon-based material including the secondary particles is ≥ 4%, optionally 5% to 20%. Further adjustment of the porosity of the silicon-based material including the secondary particles helps to further optimize the rate performance of the secondary battery.

In any embodiment of this application, a particle size by volume Dᵥ50 of the carbon-based material is 12 µm to 18 µm, optionally 13 µm to 17 µm.

In any embodiment of this application, a particle size by volume Dᵥ90 of the carbon-based material is 20 µm to 26 µm, optionally 21 µm to 25 µm.

The particle size by volume Dᵥ50 and/ Dᵥ90 of the carbon-based material being within the above ranges helps to improve ion and electron transport performance, thereby further improving the rate performance of the secondary battery. In addition, the specific surface area of the carbon-based material can also be reduced, so that side reactions are reduced, thereby further improving the cycling performance of the secondary battery.

In any embodiment of this application, the carbon-based material satisfies that (Dᵥ90-Dᵥ10)/Dᵥ50 is 0.6 to 1.5, optionally 0.9 to 1.3. When (Dᵥ90-Dᵥ10)/Dᵥ50 of the carbon-based material is within the above ranges, particle stacking performance thereof is better, helping to increase the compacted density of the negative electrode film layer, thereby further increasing the energy density of the secondary battery. In addition, it also helps the negative electrode film layer to have a proper pore distribution, thereby further improving the rate performance of the secondary battery.

In any embodiment of this application, a specific surface area of the carbon-based material is 1.5 m²/g to 3.5 m²/g, optionally 1.7 m²/g to 2.7 m²/g. The specific surface area of the carbon-based material being within the above ranges helps to reduce side reactions, thereby allowing the secondary battery to achieve better cycling performance.

In any embodiment of this application, a powder compacted density of the carbon-based material under 20000 N is 1.65 g/cm³ to 1.85 g/cm³, optionally 1.70 g/cm³ to 1.80 g/cm³. The powder compacted density of the carbon-based material being within the above ranges can increase the compacted density of the negative electrode film layer, thereby increasing the energy density of the secondary battery. In addition, it also helps the negative electrode film layer to have a proper pore distribution, improving the ion and electron transport performance and improving wettability of the negative electrode film layer to the electrolyte solution, thereby improving the rate performance and/or cycling performance of the secondary battery.

In any embodiment of this application, a tap density of the carbon-based material is 0.9 g/cm³ to 1.2 g/cm³, optionally 0.9 g/cm³ to 1.1 g/cm³. The tap density of the carbon-based material being within the above ranges can increase the compacted density of the negative electrode film layer, thereby increasing the energy density of the secondary battery. In addition, it also helps the negative electrode film layer to have a proper pore distribution, improving the ion and electron transport performance and improving the wettability of the negative electrode film layer to the electrolyte solution, thereby improving the rate performance and/or cycling performance of the secondary battery.

In any embodiment of this application, a graphitization degree of the carbon-based material is ≥ 92%, optionally 93% to 94%. The graphitization degree of the carbon-based material being within the above ranges helps to improve the ion transport performance of the negative electrode film layer, thereby allowing the secondary battery to achieve both high energy density and good rate performance.

In any embodiment of this application, a gram capacity of the carbon-based material is ≥ 354 mAh/g, optionally 355 mAh/g to 360 mAh/g. The gram capacity of the carbon-based material being within the above ranges can increase the energy density of the secondary battery and can also allow the carbon-based material to have good ion transport performance, thereby further helping to improve the rate performance of the secondary battery.

In any embodiment of this application, a powder OI value of the carbon-based material is 2 to 10, optionally 3 to 6. The powder OI value of the carbon-based material is small, so ion intercalation pores are present in all directions of the particles, such that ions from a positive electrode can be quickly received, thereby further improving the rate performance of the secondary battery.

In any embodiment of this application, a particle size by volume Dᵥ50 of the silicon-based material is 8 µm to 15 µm, optionally 10 µm to 13 µm.

In any embodiment of this application, a particle size by volume Dᵥ90 of the silicon-based material is 15 µm to 25 µm, optionally 16 µm to 24 µm.

The particle size by volume Dᵥ50 and/ Dᵥ90 of the silicon-based material being within the above ranges helps to improve the ion and electron transport performance, thereby further improving the rate performance of the secondary battery. In addition, the specific surface area of the silicon-based material can also be reduced, and side reactions can be reduced, thereby further improving the cycling performance of the secondary battery.

In any embodiment of this application, the silicon-based material satisfies that (Dᵥ90-Dᵥ10)/Dᵥ50 is 0.7 to 1.5, optionally 0.9 to 1.3.

When (Dᵥ90-Dᵥ10)/Dᵥ50 of the silicon-based material is within the above ranges, particle stacking performance thereof is better, helping to increase the compacted density of the negative electrode film layer, thereby further increasing the energy density of the secondary battery. In addition, it also helps the negative electrode film layer to have a proper pore distribution, thereby further improving the rate performance of the secondary battery.

In any embodiment of this application, a specific surface area of the silicon-based material is 0.7 m²/g to 2.0 m²/g, optionally 0.8 m²/g to 1.6 m²/g.

The specific surface area of the silicon-based material being within the above ranges helps to reduce side reactions, thereby allowing the secondary battery to achieve better cycling performance. In addition, the processing performance of a negative electrode slurry can also be improved.

In any embodiment of this application, a powder compacted density of the silicon-based material under 50000 N is 1.0 g/cm³ to 1.7 g/cm³, optionally 1.2 g/cm³ to 1.6 g/cm³.

The powder compacted density of the silicon-based material being within the above ranges can increase the compacted density of the negative electrode film layer, thereby increasing the energy density of the secondary battery. In addition, it also helps the negative electrode film layer to have a proper pore distribution, improving the ion and electron transport performance and improving the wettability of the negative electrode film layer to the electrolyte solution, thereby further improving the rate performance and/or cycling performance of the secondary battery.

In any embodiment of this application, a tap density of the silicon-based material is 1.0 g/cm³ to 1.5 g/cm³, optionally 1.1 g/cm³ to 1.4 g/cm³.

The tap density of the silicon-based material being within the above ranges can increase the compacted density of the negative electrode film layer, thereby increasing the energy density of the secondary battery. In addition, it also helps the negative electrode film layer to have a proper pore distribution, improving the ion and electron transport performance and improving the wettability of the negative electrode film layer to the electrolyte solution, thereby improving the rate performance and/or cycling performance of the secondary battery.

In any embodiment of this application, a powder resistivity of the silicon-based material under 4 MPa is ≤ 15 Ω•cm, optionally 0.5 Ω•cm to 12 Ω•cm.

Adjusting the powder resistivity of the silicon-based material to be within the above ranges can improve electronic conductivity of the negative electrode film layer and further improve the rate performance of the secondary battery.

In any embodiment of this application, the carbon-based material including the secondary particles includes artificial graphite.

In any embodiment of this application, the silicon-based material includes one or more of elemental silicon, silicon oxide, silicon-carbon material, and silicon alloy material.

In any embodiment of this application, the silicon-based material includes secondary particles formed by aggregation of at least one of the following primary particles (1) to (5): (1) primary particles of a silicon-oxygen material containing no alkali metal and no alkaline earth metal; (2) primary particles of a silicon-oxygen material containing alkali metal or alkaline earth metal; (3) primary particles of a silicon-carbon material; (4) primary particles of elemental silicon; and (5) primary particles of silicon alloy.

In any embodiment of this application, a carbon coating layer is provided on a surface of the carbon-based material or silicon-based material. This helps to improve the rate performance of the secondary battery.

In any embodiment of this application, the carbon coating layer is provided on both the surface of the carbon-based material and the surface of the silicon-based material.

In any embodiment of this application, the carbon coating layer is provided on the surface of the carbon-based material, and the carbon coating layer includes hard carbon. Hard carbon has the advantage of large interlayer spacing, which can accelerate ion diffusion, thereby helping to further improve the rate performance of the secondary battery.

In any embodiment of this application, the carbon-based material further includes primary particles. This can reduce side reactions and improve the cycling performance of the secondary battery.

In any embodiment of this application, a quantity percentage of the secondary particles in the carbon-based material is greater than a quantity percentage of the primary particles in the carbon-based material. This allows the negative electrode film layer to have more ion intercalation channels, helps to reduce the impedance of the negative electrode-electrolyte interface, helps the secondary battery to achieve better rate performance, and also allows the secondary battery to have good cycling performance.

In any embodiment of this application, the carbon-based material further includes primary particles, and the carbon-based material including the primary particles includes at least one of artificial graphite and natural graphite.

In any embodiment of this application, the silicon-based material further includes primary particles. This can reduce side reactions and improve the cycling performance of the secondary battery.

In any embodiment of this application, a quantity percentage of the secondary particles in the silicon-based material is greater than a quantity percentage of the primary particles in the silicon-based material. This allows the negative electrode film layer to have more ion intercalation channels, helps to reduce the impedance of the negative electrode-electrolyte interface, helps the secondary battery to achieve better rate performance, and also allows the secondary battery to have good cycling performance.

In any embodiment of this application, a mass percentage of the silicon-based material in the negative electrode active material is ≤ 50%, optionally 2% to 40%. Adjusting the percentage of the silicon-based material to be within the above ranges allows the secondary battery to achieve better cycling performance while improving the rate performance and energy density of the secondary battery.

In any embodiment of this application, a particle size by volume Dᵥ50 of the negative electrode active material is 10 µm to 17.5 µm, optionally 12 µm to 17 µm.

In any embodiment of this application, a particle size by volume Dᵥ90 of the negative electrode active material is 18 µm to 25.5 µm, optionally 19 µm to 24.5 µm.

The particle size by volume Dᵥ50 and/or Dᵥ90 of the negative electrode active material being within the above ranges helps to improve the ion and electron transport performance, thereby further improving the rate performance of the secondary battery. In addition, side reactions can also be reduced, improving the cycling performance of the secondary battery.

In any embodiment of this application, the negative electrode active material satisfies that (Dᵥ90-Dᵥ10)/Dᵥ50 is 0.65 to 1.5, optionally 0.9 to 1.3. When (Dᵥ90-Dᵥ10)/Dᵥ50 of the negative electrode active material is within the above ranges, particle stacking performance thereof is better, helping to increase the compacted density of the negative electrode film layer, thereby further increasing the energy density of the secondary battery. In addition, it also helps particles of the negative electrode film layer to form a proper pore structure, thereby further improving the rate performance of the secondary battery.

In any embodiment of this application, a porosity of the negative electrode film layer is ≥ 15%, optionally 18% to 50%. This helps the negative electrode film layer to achieve both a high capacity and a proper pore structure, thereby helping the secondary battery to achieve both high energy density and good cycling performance and rate performance.

In any embodiment of this application, a compacted density of the negative electrode film layer is ≤ 1.75 g/cm³, optionally 1.30 g/cm³ to 1.60 g/cm^{3.} This helps the negative electrode film layer to achieve both a high capacity and good ion and electron transport performance, thereby helping the secondary battery to achieve both high energy density and good cycling performance and rate performance.

In any embodiment of this application, a surface density of the negative electrode film layer is ≤ 10.4 g/cm², optionally 5 g/cm² to 9 g/cm². This helps the negative electrode film layer to achieve both a high capacity and good ion and electron transport performance, thereby helping the secondary battery to achieve both high energy density and good cycling performance and rate performance.

In any embodiment of this application, the secondary battery includes a positive electrode plate, the positive electrode plate includes a positive electrode active material, and the positive electrode active material includes one or more of a layered lithium transition metal oxide represented by a general formula of LiₐNi_{b}Co_{c}M_{d}M'ₑO_{f}A_{g} and a modified compound thereof, where 0.8≤a≤1.2; 0.6≤b<1; 0<c<1; 0<d<1; 0≤e≤ 0.1; 1≤f≤2; 0≤g≤1; M includes Mn and/or Al; M' includes one or more of Zr, Mn, Al, Zn,

Cu, Cr, Mg, Fe, V, Ti, and B; A includes one or more of N, F, S, and Cl; and optionally, 0.65≤b<1.

According to a second aspect of this application, an electric apparatus is provided, including the secondary battery according to the first aspect of this application.

The electric apparatus in this application includes the secondary battery provided in this application, and therefore has at least advantages that are the same as those of the secondary battery.

### BRIEF DESCRIPTION OF DRAWINGS

To describe the technical solutions of the embodiments of this application more clearly, the following briefly describes the accompanying drawings for describing the embodiments of this application. Apparently, the accompanying drawings in the following descriptions show merely some embodiments of this application, and persons of ordinary skill in the art may derive other drawings from these accompanying drawings without creative efforts.
FIG. 1 is a schematic diagram of an embodiment of a secondary battery in this application.
FIG. 2 is a schematic exploded view of an embodiment of a secondary battery in this application.
FIG. 3 is a schematic diagram of an embodiment of a battery module in this application.
FIG. 4 is a schematic diagram of an embodiment of a battery pack in this application.
FIG. 5 is a schematic exploded view of the embodiment of the battery pack shown in FIG. 4.
FIG. 6 is a schematic diagram of an embodiment of an electric apparatus using a secondary battery in this application as a power source.

In the accompanying drawings, the figures are not necessarily drawn to scale. Reference signs are as follows: 1. battery pack, 2. upper box body, 3. lower box body, 4. battery module, 5. secondary battery, 51. housing, 52. electrode assembly, and 53. cover plate.

### DESCRIPTION OF EMBODIMENTS

The following specifically discloses in detail embodiments of the secondary battery and electric apparatus of this application, with appropriate reference to the accompanying drawings. However, there may be cases in which unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, such as, an integer of 2, 3, 4, 5, 6, 7, 8, 9, 10, 11, 12, or the like.

Unless otherwise specified, all the embodiments and optional embodiments of this application can be combined with each other to form new technical solutions, and such technical solutions should be considered to be included in the disclosure of this application.

Unless otherwise specified, all the technical features and optional technical features of this application can be combined with each other to form new technical solutions, and such technical solutions should be considered to be included in the disclosure of this application.

Unless otherwise specified, all the steps in this application can be performed in the order described or in a random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "comprise" mentioned in this application are inclusive or may be exclusive. For example, the terms "include" and "comprise" can mean that other unlisted components may also be included or comprised, or only listed components are included or comprised.

Unless otherwise stated, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Unless otherwise specified, the terms used in this application have well-known meanings as commonly understood by persons skilled in the art.

Unless otherwise specified, numerical values of parameters mentioned in this application may be measured using various measurement methods commonly used in the art, for example, they may be measured using the measurement methods provided in this application. Unless otherwise stated, tests are all performed at a temperature of 25°C.

In this application, the term "a plurality of" means two or more than two and the term "a plurality of types" means two types or more than two types.

Negative electrode plates serve as an important component of secondary batteries, so the performance of negative electrode plates is crucial to the performance of secondary batteries. At present, graphite is the most commonly used negative electrode active material. However, the energy density and rate performance of a secondary battery using graphite have both approached theoretical values. Silicon-based materials have the advantage of high theoretical energy density, and mixing a silicon-based material with a graphite material can significantly increase the energy density of secondary batteries. However, silicon-based materials have high electronic resistivity, causing rapid decay of reversible capacity of secondary batteries, and such decay phenomenon is more severe at high rates, which in turn results in insufficient improvement of the rate performance of secondary batteries. Therefore, there is still no simple and feasible solution for collocating a graphite material with a silicon-based material to achieve better rate performance.

In view of this, the inventors have proposed this application after a great number of research.

Specifically, the embodiments of this application provide a secondary battery.

The secondary battery is not limited to any particular type in this application. For example, the secondary battery may be a lithium-ion battery or the like. Generally, a secondary battery includes a positive electrode plate, a negative electrode plate, an electrolyte, and the like. During charging and discharging of the secondary battery, ions are intercalated and deintercalated between the positive electrode plate and the negative electrode plate, and the electrolyte transports ions between the positive electrode plate and the negative electrode plate. The electrolyte is not limited to any particular type in this application, and may be selected depending on actual needs. For example, the electrolyte may be selected from at least one of a solid electrolyte and a liquid electrolyte (that is, an electrolyte solution). Secondary batteries using an electrolyte solution and some secondary batteries using a solid electrolyte may further include a separator. The separator is disposed between the positive electrode plate and the negative electrode plate for separation.

### [Negative electrode plate]

A negative electrode plate includes a negative electrode current collector, and a negative electrode film layer that is provided on at least one surface of the negative electrode current collector and includes a negative electrode active material. The negative electrode active material includes a carbon-based material and a silicon-based material. The carbon-based material includes secondary particles formed by aggregation of primary particles. The silicon-based material includes secondary particles formed by aggregation of primary particles.

Compared with a pure carbon-based material that is used as a negative electrode active material, a mixture of a carbon-based material and a silicon-based material is used as the negative electrode active material in this application. Therefore, the gram capacity of the negative electrode active material in this application is higher, achieving a higher energy density with a lower surface density.

The inventors have noticed during research that with a lower surface density, the influence of the impedance of the negative electrode-electrolyte interface on the rate performance of the secondary battery increases, and the influence of ion diffusion impedance on the rate performance of the secondary battery decreases. Moreover, the inventors have found in further research that optimizing a particle structure of the carbon-based material and silicon-based material helps to further optimize the rate performance of the secondary battery.

In the negative electrode active material of this application, both the carbon-based material and the silicon-based material include secondary particles formed by aggregation of primary particles, thereby increasing ion intercalation channels and reducing the impedance of the negative electrode-electrolyte interface, such that the secondary battery can achieve both high energy density and better rate performance.

In some embodiments, the particle size by volume Dᵥ50 of the carbon-based material may be greater than the particle size by volume Dᵥ50 of the silicon-based material. The electronic conductivity and ionic conductivity of the silicon-based material are both lower than those of the carbon-based material. Making the particle size by volume Dᵥ50 of the carbon-based material be greater than the particle size by volume Dᵥ50 of the silicon-based material can reduce adverse impact of large silicon-based particles on the rate performance of the secondary battery. In addition, the collocation of large particles and small particles also helps to increase the compacted density of the negative electrode plate, thereby increasing the energy density of the secondary battery.

In some embodiments, a quantity percentage of the secondary particles in the carbon-based material may be greater than a quantity percentage of the secondary particles in the silicon-based material. The silicon-based material including the secondary particles have low compressive strength. Therefore, when the secondary particles have a large quantity percentage, the particles of the silicon-based material are prone to breakage under a high compacted density, thus easily causing significant deterioration of the cycling performance of the secondary battery. However, reducing the compacted density for reducing particle breakage of the silicon-based material sacrifices the energy density of the secondary battery. The quantity percentage of the secondary particles in the carbon-based material being greater than the quantity percentage of the secondary particles in the silicon-based material can balance the cycling performance and energy density of the secondary battery.

In some embodiments, the quantity percentage of the secondary particles in the carbon-based material may be ≥ 70%, optionally 70% to 95%, 70% to 92%, 70% to 90%, 70% to 88%, 75% to 95%, 75% to 92%, 75% to 90%, or 75% to 88%. When the carbon-based material includes a proper proportion of secondary particles, the ion intercalation channels in the negative electrode film layer can be increased, and the impedance of the negative electrode-electrolyte interface can be reduced, thereby further optimizing the rate performance of the secondary battery. In addition, battery polarization can also be reduced, thereby allowing the secondary battery to have good cycling performance.

In some embodiments, the quantity percentage of the secondary particles in the silicon-based material may be ≥ 55%, optionally 55% to 90%, 55% to 85%, 55% to 80%, 55% to 75%, 55% to 70%, 60% to 90%, 60% to 85%, 60% to 80%, 60% to 75%, or 60% to 70%. When the silicon-based material includes a proper proportion of secondary particles, the ion intercalation channels in the negative electrode film layer can be increased, and the impedance of the negative electrode-electrolyte interface can be reduced, thereby further optimizing the rate performance of the secondary battery. In addition, battery polarization can also be reduced, thereby allowing the secondary battery to have good cycling performance.

In some embodiments, the quantity percentage of the secondary particles in the carbon-based material is 75% to 90%, and the quantity percentage of the secondary particles in the silicon-based material is 60% to 85%.

The primary particles and the secondary particles both have meanings well known in the art. The primary particles refer to particles in a non-agglomerated state. The secondary particles are particles in an agglomerated state, which are formed by aggregation of two or more primary particles. The primary particles and the secondary particles can be distinguished using scanning electron microscopy (SEM) images.

In an example, a method for testing the quantity percentage of the secondary particles in the carbon-based material may include: laying the negative electrode active material (which can be obtained from the negative electrode plate) and adhering it to a conductive adhesive to prepare a to-be-tested sample of 6 cm×1.1 cm; and testing particle morphology using a scanning electron microscope, where for the test, reference may be made to JY/T010-1996. To ensure the accuracy of test results, a plurality of (for example, 10) different regions may be randomly selected in the to-be-tested sample for a scanning test, and at a specified magnification factor (for example, 500 times or 1000 times), a ratio of a quantity of the secondary particles of the carbon-based material to a total quantity of the carbon-based material in each test region is calculated, and an average value of calculation results of the plurality of test regions is taken as a test result. To ensure the accuracy of the test results, a plurality of to-be-tested samples (for example, 5 or 10) may be prepared and subjected to the above test, and an average value of the to-be-tested samples is taken as a final test result. The quantity percentage of the secondary particles in the silicon-based material may be tested in a similar way.

The quantity percentage of the secondary particles in the carbon-based material can be adjusted using methods known in the art. For example, when the carbon-based material is graphite, the quantity percentage of the secondary particles may be adjusted by regulating preparation parameters (for example, type of a raw coke material, shaping process, granulation process, and type and amount of added granulating agent). Alternatively, the quantity percentage of the secondary particles may be adjusted by regulating a mixing ratio of graphite primary particles and graphite secondary particles (the types of the graphite primary particles and graphite secondary particles may be the same or different).

The quantity percentage of the secondary particles in the silicon-based material can be adjusted using a similar method. For example, the quantity percentage of the secondary particles may be adjusted by regulating preparation parameters (for example, types of raw materials, granulation process, and type and amount of added granulating agent). Alternatively, the quantity percentage of the secondary particles may be adjusted by regulating a mixing ratio of the primary particles of the silicon-based material and the secondary particles of the silicon-based material.

In some embodiments, a porosity of the silicon-based material including the secondary particles may be ≥ 4%, optionally 5% to 20%. Further adjustment of the porosity of the silicon-based material including the secondary particles helps to further optimize the rate performance of the secondary battery.

The inventors have found through further research that when the carbon-based material further satisfies one or more of the following conditions while satisfying the above design, the performance of the secondary battery can be further improved, for example, at least one of the energy density, cycling performance, and rate performance of the secondary battery is improved.

In some embodiments, the carbon-based material including the secondary particles includes artificial graphite.

In some embodiments, the carbon-based material further includes primary particles (which refer to particles in a non-agglomerated state herein). This can reduce side reactions and improve the cycling performance of the secondary battery.

In some embodiments, the quantity percentage of the secondary particles in the carbon-based material is greater than the quantity percentage of the primary particles in the carbon-based material. This allows the negative electrode film layer to have more ion intercalation channels, helps to reduce the impedance of the negative electrode-electrolyte interface, helps the secondary battery to achieve better rate performance, and also allows the secondary battery to have good cycling performance.

In some embodiments, the carbon-based material further includes primary particles, and the carbon-based material including the primary particles include at least one of artificial graphite and natural graphite, optionally artificial graphite.

In some embodiments, a carbon coating layer may be provided on a surface of the carbon-based material. This helps to improve the rate performance of the secondary battery.

In some embodiments, the carbon-based material includes artificial graphite with a carbon coating layer on surface.

In some embodiments, the carbon coating layer is provided on more than 80% of the surface of the carbon-based material; and optionally, the carbon coating layer is provided on 90% to 100% of the surface of the carbon-based material.

In some embodiments, carbon in the carbon coating layer on the surface of the carbon-based material includes amorphous carbon. This helps to improve the rate performance of the secondary battery.

The carbon coating layer may be formed by carbonizing an organic carbon source. The organic carbon source may be a carbon-containing material known in the art and suitable for coating. For example, the organic carbon source may include one or more of coal tar pitch, petroleum pitch, phenolic resin, and coconut shell.

In some embodiments, the carbon coating layer is provided on the surface of the carbon-based material, and the carbon coating layer includes hard carbon. Hard carbon has the advantage of large interlayer spacing, which can accelerate ion diffusion, thereby helping to further improve the rate performance of the secondary battery.

In some embodiments, the particle size by volume Dᵥ50 of the carbon-based material may be 12 µm to 18 µm, optionally 13 µm to 17 µm.

In some embodiments, the particle size by volume Dᵥ90 of the carbon-based material may be 20 µm to 26 µm, optionally 21 µm to 25 µm.

The particle size by volume Dᵥ50 and/ Dᵥ90 of the carbon-based material being within the above ranges helps to improve the ion and electron transport performance, thereby further improving the rate performance of the secondary battery. In addition, the specific surface area of the carbon-based material can also be reduced, so that side reactions are reduced, thereby further improving the cycling performance of the secondary battery.

In some embodiments, the carbon-based material satisfies that (Dᵥ90-Dᵥ10)/Dᵥ50 may be 0.6 to 1.5, optionally 0.9 to 1.3.

When (Dᵥ90-Dᵥ10)/Dᵥ50 of the carbon-based material is within the above ranges, particle stacking performance thereof is better, helping to increase the compacted density of the negative electrode film layer, thereby further increasing the energy density of the secondary battery. In addition, it also helps the negative electrode film layer to have a proper pore distribution, thereby further improving the rate performance of the secondary battery.

In some embodiments, a specific surface area of the carbon-based material is 1.5 m²/g to 3.5 m²/g, optionally 1.7 m²/g to 2.7 m²/g.

The specific surface area of the carbon-based material being within the above ranges helps to reduce side reactions, thereby allowing the secondary battery to achieve better cycling performance.

In some embodiments, a powder compacted density of the carbon-based material under 20000 N may be 1.65 g/cm³ to 1.85 g/cm³, optionally 1.70 g/cm³ to 1.80 g/cm³.

The powder compacted density of the carbon-based material being within the above ranges can increase the compacted density of the negative electrode film layer, thereby increasing the energy density of the secondary battery. In addition, it also helps the negative electrode film layer to have a proper pore distribution, improving the ion and electron transport performance and improving wettability of the negative electrode film layer to the electrolyte solution, thereby improving the rate performance and/or cycling performance of the secondary battery.

In some embodiments, a tap density of the carbon-based material may be 0.9 g/cm³ to 1.2 g/cm³, optionally 0.9 g/cm³ to 1.1 g/cm³.

The tap density of the carbon-based material being within the above ranges can increase the compacted density of the negative electrode film layer, thereby increasing the energy density of the secondary battery. In addition, it also helps the negative electrode film layer to have a proper pore distribution, improving the ion and electron transport performance and improving the wettability of the negative electrode film layer to the electrolyte solution, thereby improving the rate performance and/or cycling performance of the secondary battery.

In some embodiments, a graphitization degree of the carbon-based material may be ≥ 92%, optionally 93% to 94%.

The graphitization degree of the carbon-based material being within the above ranges helps to improve the ion transport performance of the negative electrode film layer, thereby allowing the secondary battery to achieve both high energy density and good rate performance.

In some embodiments, a gram capacity of the carbon-based material may be ≥ 354 mAh/g, optionally 355 mAh/g to 360 mAh/g.

The gram capacity of the carbon-based material being within the above ranges can increase the energy density of the secondary battery and can also allow the carbon-based material to have good ion transport performance, thereby further helping to improve the rate performance of the secondary battery.

In some embodiments, a powder OI value of the carbon-based material may be 2 to 10, optionally 3 to 6.

The powder OI value of the carbon-based material is small, so ion intercalation pores are present in all directions of the particles, such that ions from a positive electrode can be quickly received, thereby further improving the rate performance of the secondary battery.

The inventors have found through further research that when the silicon-based material satisfies one or more of the following conditions while satisfying the above design, the performance of the secondary battery can be further improved, for example, at least one of the energy density, cycling performance, and rate performance of the secondary battery is improved.

In some embodiments, the silicon-based material may include one or more of elemental silicon, silicon oxide (SiOₓ, 0<x≤2), silicon-carbon material, and silicon alloy material. The silicon-carbon material is not limited to any specific structure in this application. For example, high-energy ball milling may be used for dispersing nano-silicon in a carbon material, dispersing nano-silicon in porous carbon, dispersing a carbon material in porous silicon, coating the surface of nano-silicon with a carbon material, co-depositing nano-silicon and nano-carbon, and the like.

In some embodiments, the silicon-based material may include secondary particles formed by aggregation of at least one of the following primary particles (1) to (5): (1) primary particles of a silicon-oxygen material containing no alkali metal and no alkaline earth metal; (2) primary particles of a silicon-oxygen material containing alkali metal or alkaline earth metal; (3) primary particles of a silicon-carbon material; (4) primary particles of elemental silicon; and (5) primary particles of silicon alloy.

Optionally, the alkali metal includes Li. Optionally, the alkaline earth metal includes Mg.

For example, the first silicon-based material includes secondary particles formed by aggregation of primary particles of a silicon-oxygen material containing no alkali metal and no alkaline earth metal, secondary particles formed by aggregation of primary particles of a silicon-oxygen material containing no alkali metal and no alkaline earth metal and primary particles of a silicon-oxygen material containing alkali metal or alkaline earth metal, secondary particles formed by aggregation of primary particles of a silicon-oxygen material containing alkali metal or alkaline earth metal, secondary particles formed by aggregation of primary particles of a silicon-carbon material, secondary particles formed by aggregation of primary particles of a silicon-carbon material and primary particles of a silicon-oxygen material containing no alkali metal and no alkaline earth metal, and secondary particles formed by aggregation of primary particles of a silicon-carbon material and primary particles of a silicon-oxygen material containing alkali metal or alkaline earth metal.

In some embodiments, the silicon-based material further includes primary particles (which refer to particles in a non-agglomerated state herein). This can reduce side reactions and improve the cycling performance of the secondary battery. Specific types of the silicon-based material including the primary particles and the silicon-based material including the secondary particles may be the same or different.

In some embodiments, the quantity percentage of the secondary particles in the carbon-based material may be greater than the quantity percentage of the primary particles in the silicon-based material. This allows the negative electrode film layer to have more ion intercalation channels, helps to reduce the impedance of the negative electrode-electrolyte interface, helps the secondary battery to achieve better rate performance, and also allows the secondary battery to have good cycling performance.

In some embodiments, a carbon coating layer may be provided on a surface of the silicon-based material. This can improve the electronic conductivity of the silicon-based material and improve the rate performance of the secondary battery. The carbon coating layer may be formed using a chemical vapor deposition method, a pyrolysis method, a hydrothermal method, or the like.

In some embodiments, the carbon coating layer is provided on more than 80% of the surface of the silicon-based material; and optionally, the carbon coating layer is provided on 90% to 100% of the surface of the silicon-based material.

In some embodiments, the carbon coating layer is provided on both the surface of the carbon-based material and the surface of the silicon-based material.

In some embodiments, the particle size by volume Dᵥ50 of the silicon-based material may be 8 µm to 15 µm, optionally 10 µm to 13 µm.

In some embodiments, the particle size by volume Dᵥ90 of the silicon-based material may be 15 µm to 25 µm, optionally 16 µm to 24 µm.

The particle size by volume Dᵥ50 and/ Dᵥ90 of the silicon-based material being within the above ranges helps to improve the ion and electron transport performance, thereby further improving the rate performance of the secondary battery. In addition, the specific surface area of the silicon-based material can also be reduced, and side reactions can be reduced, thereby further improving the cycling performance of the secondary battery.

In some embodiments, the silicon-based material satisfies that (Dᵥ90-Dᵥ10)/Dᵥ50 may be 0.7 to 1.5, optionally 0.9 to 1.3.

When (Dᵥ90-Dᵥ10)/Dᵥ50 of the silicon-based material is within the above ranges, particle stacking performance thereof is better, helping to increase the compacted density of the negative electrode film layer, thereby further increasing the energy density of the secondary battery. In addition, it also helps the negative electrode film layer to have a proper pore distribution, thereby further improving the rate performance of the secondary battery.

In some embodiments, a specific surface area of the silicon-based material is 0.7 m²/g to 2.0 m²/g, optionally 0.8 m²/g to 1.6 m²/g.

The specific surface area of the silicon-based material being within the above ranges helps to reduce side reactions, thereby allowing the secondary battery to achieve better cycling performance. In addition, the processing performance of a negative electrode slurry can also be improved.

In some embodiments, a powder compacted density of the silicon-based material under 50000 N may be 1.0 g/cm³ to 1.7 g/cm³, optionally 1.2 g/cm³ to 1.6 g/cm³.

The powder compacted density of the silicon-based material being within the above ranges can increase the compacted density of the negative electrode film layer, thereby increasing the energy density of the secondary battery. In addition, it also helps the negative electrode film layer to have a proper pore distribution, improving the ion and electron transport performance and improving the wettability of the negative electrode film layer to the electrolyte solution, thereby further improving the rate performance and/or cycling performance of the secondary battery.

In some embodiments, a tap density of the silicon-based material may be 1.0 g/cm³ to 1.5 g/cm³, optionally 1.1 g/cm³ to 1.4 g/cm³.

The tap density of the silicon-based material being within the above ranges can increase the compacted density of the negative electrode film layer, thereby increasing the energy density of the secondary battery. In addition, it also helps the negative electrode film layer to have a proper pore distribution, improving the ion and electron transport performance and improving the wettability of the negative electrode film layer to the electrolyte solution, thereby improving the rate performance and/or cycling performance of the secondary battery.

In some embodiments, a powder resistivity of the silicon-based material under 4 MPa is ≤ 15 Ω•cm, optionally 0.5 Ω•cm to 12 Ω•cm. Adjusting the powder resistivity of the silicon-based material to be within the above ranges can improve electronic conductivity of the negative electrode film layer and further improve the rate performance of the secondary battery.

In some embodiments, a mass percentage of the silicon-based material in the negative electrode active material is ≤ 50%, optionally 2% to 40%, 2% to 30%, 2% to 20%, 3% to 40%, 3% to 30%, or 3% to 20%. Adjusting the percentage of the silicon-based material to be within the above ranges allows the secondary battery to achieve better cycling performance while improving the rate performance and energy density of the secondary battery.

In some embodiments, the negative electrode active material includes a carbon-based material and a silicon-based material, where the carbon-based material includes secondary particles formed by aggregation of primary particles, and the silicon-based material includes secondary particles formed by aggregation of primary particles. A carbon coating layer is provided on a surface of the carbon-based material. A particle size by volume Dᵥ50 of the carbon-based material is greater than a particle size by volume Dᵥ50 of the silicon-based material. A quantity percentage of the secondary particles in the carbon-based material is greater than a quantity percentage of the secondary particles in the silicon-based material. The quantity percentage of the secondary particles in the carbon-based material is ≥ 70%, optionally 75% to 90%; and the quantity percentage of the secondary particles in the silicon-based material is ≥ 55%, optionally 60% to 85%. This allows the secondary battery to achieve better cycling performance while improving the rate performance of the secondary battery.

In some embodiments, the particle size by volume Dᵥ50 of the negative electrode active material may be 10 µm to 17.5 µm, optionally 12 µm to 17 µm.

In some embodiments, the particle size by volume Dᵥ90 of the negative electrode active material may be 18 µm to 25.5 µm, optionally 19 µm to 24.5 µm.

The particle size by volume Dᵥ50 and/or Dᵥ90 of the negative electrode active material can be made to be within the above ranges by regulating the parameter such as the particle size by volume, particle size distribution, and mass percentage of the carbon-based material and/or silicon-based material. The particle size by volume Dᵥ50 and/or Dᵥ90 of the negative electrode active material being within the above ranges helps to improve the ion and electron transport performance, thereby further improving the rate performance of the secondary battery. In addition, side reactions can also be reduced, improving the cycling performance of the secondary battery.

In some embodiments, the negative electrode active material satisfies that (Dᵥ90-Dᵥ10)/Dᵥ50 may be 0.65 to 1.5, optionally 0.9 to 1.3. The particle size distribution (Dᵥ90-Dᵥ10)/Dᵥ50 of the negative electrode active material can be made to be within the above ranges by regulating the parameters such as the particle size by volume, particle size distribution, and mass percentage of the carbon-based material and/or silicon-based material. When (Dᵥ90-Dᵥ10)/Dᵥ50 of the negative electrode active material is within the above ranges, particle stacking performance thereof is better, helping to increase the compacted density of the negative electrode film layer, thereby further increasing the energy density of the secondary battery. In addition, it also helps particles of the negative electrode film layer to form a proper pore structure, thereby further improving the rate performance of the secondary battery.

In some embodiments, in addition to the carbon-based material and the silicon-based material, the negative electrode film layer may further include another negative electrode active material known in the art. For example, the negative electrode film layer may further include one or more of lithium titanate and a tin-based material.

In some embodiments, the negative electrode film layer further optionally includes a negative electrode conductive agent. The negative electrode conductive agent is not limited to any particular type in this application. For example, the negative electrode conductive agent may include one or more of superconducting carbon, conductive graphite, acetylene black, carbon black, Ketjen black, carbon dots, carbon nanotubes, graphene, and carbon nanofiber.

In some embodiments, the negative electrode film layer further optionally includes a negative electrode binder. The negative electrode binder is not limited to any particular type in this application. For example, the negative electrode binder may include one or more of styrene-butadiene rubber (SBR), water-soluble unsaturated resin SR-1B, waterborne acrylic resin (for example, polyacrylic acid PAA, polymethylacrylic acid PMAA, and polyacrylic acid sodium PAAS), polyacrylamide (PAM), polyvinyl alcohol (PVA), sodium alginate (SA), and carboxymethyl chitosan (CMCS).

In some embodiments, the negative electrode film layer further optionally includes other additives. For example, the other additives may include a thickener, for example, sodium carboxymethyl cellulose (CMC) or a PTC thermistor material.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. For example, the metal material may include one or more of copper, copper alloy, nickel, nickel alloy, titanium, titanium alloy, silver, and silver alloy. For example, the polymer material matrix may include one or more of polypropylene (PP), polyethylene terephthalate (PET), polybutylene terephthalate (PBT), polystyrene (PS), and polyethylene (PE).

The negative electrode film layer is typically formed by applying a negative electrode slurry onto the negative electrode current collector, followed by drying and cold pressing. The negative electrode slurry is typically formed by dispersing the negative electrode active material, the optional conductive agent, the optional binder, and the optional other additives in a solvent and stirring them to uniformity. The solvent may be but is not limited to N-methylpyrrolidone (NMP) or deionized water.

The negative electrode active material (for example, the silicon-based material and the carbon-based material) mentioned above may be commercially available or prepared using the following methods in this application.

In some embodiments, the silicon-based material including the secondary particles may be prepared using the following method: preparing a solution including primary particles, a binder, and a solvent, and performing spray drying on the solution to obtain a silicon-based material including secondary particles. The binder is not particularly limited, and may include one or more of asphalt, starch, phenolic resin, polyvinyl alcohol, epoxy resin, vinylidene chloride resin, butyl rubber, and the like in a specific example. The solvent is not particularly limited as long as the primary particles are fully dispersed therein, and may include one or more of water, alcohol, N-methylpyrrolidone (NMP), dimethyl sulfoxide, acetonitrile, acetone, tetrahydrofuran, diethyl ether, methylbenzene, 1,2-dichlorobenzene in a specific example. The spray drying may be performed at a temperature between 100°C and 250°C.

Alternatively, the silicon-based material including the secondary particles may be prepared using the following method: mixing primary particles with a binder, followed by granulation and thermal treatment to obtain a silicon-based material including secondary particles. The binder is not particularly limited, and may include one or more of asphalt, starch, phenolic resin, polyvinyl alcohol, epoxy resin, vinylidene chloride resin, butyl rubber, and the like in a specific example.

The porosity of the silicon-based material including the secondary particles is made to be within a proper range by adjusting an aggregation situation. Specifically, the secondary particles may be soaked into a high-temperature melt solution of a filling agent, a filling degree of the filling agent is controlled in a pressurization manner, and then high-temperature carbonization is performed, so as to implement porosity adjustment. The filling agent may include one or more of asphalt, starch, phenolic resin, polyvinyl alcohol, epoxy resin, vinylidene chloride resin, butyl rubber, polymethyl methacrylate, and the like in a specific example.

During the preparation of the silicon-based material including the secondary particles, the types of the primary particles used may be the same or different.

In some embodiments, the carbon-based material including the secondary particles may be prepared using the following method: crushing and shaping a raw coke material, and then mixing the raw coke material with a binder for granulation, followed by graphitization to obtain a carbon-based material including secondary particles. The raw coke material may include one or more of petroleum coke, needle coke, pitch coke, and metallurgical coke in a specific example. The graphitization may be performed at a temperature between 2800°C and 3200°C. The binder may include asphalt in a specific example.

The preparation process does not include a step of forming a carbon coating layer on a surface of the material. In an example, the carbon coating layer on the surface of the carbon-based material may be formed by carbonization of an organic carbon source. The organic carbon source may be a carbon-containing material known in the art and suitable for coating. For example, the organic carbon source may include one or more of coal tar pitch, petroleum pitch, phenolic resin, and coconut shell. The carbon coating layer on the surface of the silicon-based material may be formed using a chemical vapor deposition method, a pyrolysis method, a hydrothermal method, or the like.

The negative electrode plate does not exclude another additional functional layer other than the negative electrode film layer. For example, in some embodiments, the negative electrode plate in this application further includes a conductive primer layer (for example, including a conductive agent and a binder) sandwiched between the negative electrode current collector and the negative electrode film layer and disposed on the surface of the negative electrode current collector. In some embodiments, the negative electrode plate in this application further includes a protective layer covering the surface of the negative electrode film layer.

In some embodiments, a porosity of the negative electrode film layer is ≥ 15%, optionally 18% to 50%. This helps the negative electrode film layer to achieve both a high capacity and a proper pore structure, thereby helping the secondary battery to achieve both high energy density and good cycling performance and rate performance.

In some embodiments, a compacted density of the negative electrode film layer is ≤ 1.75 g/cm³, optionally 1.30 g/cm³ to 1.60 g/cm^{3.} This helps the negative electrode film layer to achieve both a high capacity and good ion and electron transport performance, thereby helping the secondary battery to achieve both high energy density and good cycling performance and rate performance.

In some embodiments, a surface density of the negative electrode film layer is ≤ 10.4 g/cm², optionally 5 g/cm² to 9 g/cm². This helps the negative electrode film layer to achieve both a high capacity and good ion and electron transport performance, thereby helping the secondary battery to achieve both high energy density and good cycling performance and rate performance.

The negative electrode current collector has two opposite surfaces in its thickness direction, and the negative electrode film layer is provided on either one or both of the two opposite surfaces of the negative electrode current collector. It should be noted that the parameters of each negative electrode film layer (for example, the compacted density, the surface density, and the porosity) given in this application all refer to the parameters of the negative electrode film layer on one side of the negative electrode current collector. When the negative electrode film layer is disposed on both sides of the negative electrode current collector, the parameters of the negative electrode film layer on any side of the negative electrode current collector satisfy this application, that is, are considered to fall within the protection scope of this application.

Whether a carbon coating layer is present on the surface of the material (for example, the carbon-based material and the silicon-based material) can be determined through a transmission electron microscopy.

The particle size by volume Dᵥ10, Dᵥ50, and Dᵥ90 of the material (for example, the carbon-based material, the silicon-based material, and the negative electrode active material) have meanings well known in the art, which respectively represent corresponding particle sizes of the material at 10%, 50%, and 90% in the cumulative volume distribution and can be determined using an instrument and method well known in the art. For example, the particle size by volume Dᵥ10, Dᵥ50, and Dᵥ90 can be measured using a laser particle size analyzer in accordance with GB/T 19077-2016. The test instrument may be a Mastersizer 3000 laser particle size analyzer from Malvern Instruments of UK.

The specific surface area of the material (for example, the carbon-based material and the silicon-based material) has a meaning known in the art and can be measured using instruments and methods known in the art. For example, the specific surface area can be tested using a nitrogen adsorption specific surface area analysis test method in accordance with GB/T 19587-2017, and calculated using a BET (Brunauer Emmett Teller) method. The test instrument may be a Tri-Star 3020 specific surface area and pore size analyzer from Micromeritics of USA.

The powder compacted density of the material (for example, the carbon-based material and the silicon-based material) has a meaning known in the art and can be measured using instruments and methods known in the art. For example, the powder compacted density can be measured using an electronic pressure tester (for example, a UTM7305 electronic pressure tester) in accordance with GB/T 24533-2009. An exemplary test method is as follows: 1 g of sample powder is weighed and added into a mold with a bottom area of 1.327 cm², the mold is pressurized to a required pressure, the pressure is maintained for 30s, subsequently the pressure is released for 10 s, and then a powder compacted density of the material under the required pressure is recorded and calculated.

The tap density of the material (for example, the carbon-based material and the silicon-based material) has a meaning known in the art and can be measured using instruments and methods known in the art. For example, the tap density can be measured using a powder tap density tester in accordance with GB/T 5162-2006. The test instrument may be BT-301 from Bettersize Instrument Co., Ltd., with test parameters as follows: vibration frequency: 250±15 times/min; amplitude: 3±0.2 mm; vibration times: 5000; and measuring cylinder: 25 mL.

The graphitization degree of the carbon-based material has a meaning known in the art and can be tested using instruments and methods known in the art. For example, the graphitization degree can be tested using an X-ray diffractometer (for example, Bruker D8 Discover). The test can be performed with reference to IS K 0131-1996 and JB/T 4220-2011 to obtain an average interlayer spacing d₀₀₂ of a C(002) crystal plane in a crystal structure of the material, and then the graphitization degree is calculated according to a formula of g=(0.344-d₀₀₂)/(0.344-0.3354)×100%. In the above formula, d₀₀₂ is the average interlayer spacing of the C(002) crystal plane in the crystal structure of the material, expressed in nanometer (nm).

The powder OI value of the carbon-based material has a meaning known in the art and can be tested using instruments and methods known in the art. For example, the powder OI value can be tested using an X-ray diffractometer (for example, Bruker D8 Discover), the test can be performed with reference to JIS K 0131-1996 and JB/T 4220-2011 to obtain an X-ray diffraction pattern of the powder sample, and the powder OI value of the sample is calculated according to a formula of OI value=I₀₀₄/I₁₁₀. I₀₀₄ is an integral area of a diffraction peak of a 004 crystal plane of crystalline carbon in the powder sample, and I₁₁₀ is an integral area of a diffraction peak of a 110 crystal plane of the crystalline carbon in the powder sample. In the X-ray diffraction analysis test in this application, a copper target can be used as an anode target, with CuKα rays as a radiation source, a ray wavelength λ=1.5418Å, a scanning 2θ angle range of 20° to 80°, and a scanning speed of 4 °/min.

The powder resistivity of the silicon-based material has a meaning known in the art and can be tested using instruments and methods known in the art. For example, the powder resistivity can be tested using a resistivity tester (for example, ST2722 Powder Resistivity Tester from Suzhou Lattice Electronics Co., Ltd.), 1 g of powder sample may be taken for the test, the powder sample is placed between electrodes of the resistivity tester, an electronic pressure tester is used to apply a constant test pressure (for example, 4 Mpa), and the pressure is maintained for 15s to 25s, and obtain a sheet sample. The powder resistivity δ of the material is calculated according to a formula of δ=(S×R)/h, measured in Ω•cm. h represents a height of the sheet sample, measured in cm; R represents a resistance, measured in Q; and S represents an area of the sheet sample, measured in cm².

The gram capacity of the carbon-based material has a meaning known in the art and can be tested using methods known in the art. An exemplary test method is as follows: sample powder, a conductive agent carbon black (Super P), and a binder polyvinylidene fluoride (PVDF) at a mass ratio of 91.6:1.8:6.6 are mixed to uniformity in a solvent N-methylpyrrolidone (NMP) to prepare a slurry; the prepared slurry is applied onto a surface of a negative electrode current collector copper foil, and the copper foil is dried in an oven for later use; ethylene carbonate (EC), ethyl methyl carbonate (EMC), and diethyl carbonate (DEC) at a volume ratio of 1:1:1 are mixed to obtain an organic solvent; then LiPF₆ is dissolved in the above organic solvent to prepare an electrolyte solution with a concentration of 1 mol/L; then a metal lithium sheet is used as a counter electrode and a polyethylene (PE) film is used as a separator, to be assembled with the above electrolyte solution in an argon-protected glove box to form a CR2430 type button cell; the obtained button cell is left standing for 12 h, charged to 0.005 V at a constant current of 0.05C at 25°C, left standing for 10 min, discharged to 0.005 V at a constant current of 50 µA, left standing for 10 min, discharged to 0.005 V at a constant current of 10 µA, and charged to 2 V at a constant current of 0.1 C; and a charge capacity is recorded. A ratio of the charge capacity to a mass of the sample is the gram capacity.

The porosity of the silicon-based material including the secondary particles can be measured using methods known in the art. For example, the true density ρᵣ of the silicon-based material including the secondary particles can be tested using a true density tester (for example, AccuPyc II 1340). Specifically, the test may include the following steps: a certain mass (denoted as m) of sample is weighed and placed in the true density tester; a test system is sealed and introduced with helium according to procedures; a gas pressure in a sample chamber and an expansion chamber is detected; then a true volume Vᵣ of the silicon-based material including the secondary particles is calculated according to Boyle's law (PV=nRT); and then the true density ρᵣ of the silicon-based material including the secondary particles is ρᵣ=m/Vᵣ. An apparent density of the silicon-based material including the secondary particles can be obtained by: placing a certain mass (denoted as m) of sample into a cylindrical mold with an inner diameter of 10 mm, applying a pressure of 200 MPa to obtain an apparent volume V₀ of the silicon-based material including the secondary particles, and then obtaining the apparent density of the silicon-based material including secondary particles as ρ₀=m/V₀. The porosity of the silicon-based material including the secondary particles is denoted as P, and P=(1-p₀/ρᵣ)×100%.

The surface density of the negative electrode film layer has a meaning known in the art and can be tested using methods known in the art. For example, a single side-coated and cold-pressed negative electrode plate can be taken (if it is a negative electrode plate with both sides coated, the negative electrode film layer on one side can be wiped off first) is taken, and punched into a small disc with an area of S₁, and a weight of the small disc is weighed and recorded as M₁. Subsequently, the negative electrode film layer of the weighed negative electrode plate is wiped off, and a weight of the negative electrode current collector is weighed and recorded as M₀. Surface density of negative electrode plate=(M₁-M₀)/S₁.

The compacted density of the negative electrode film layer has a meaning known in the art and can be tested using methods known in the art. Compacted density of negative electrode film layer=surface density of negative electrode film layer/thickness of negative electrode film layer. The thickness of the negative electrode film layer has a meaning known in the art and can be tested using methods known in the art, for example, using a micrometer (for example, Mitutoyo 293-100, with an accuracy of 0.1 µm).

The porosity of the negative electrode film layer has a meaning known in the art and can be tested using methods known in the art. An exemplary test method is as follows: a single side-coated and cold-pressed negative electrode plate (if it is a negative electrode plate with both sides coated, the negative electrode film layer on one side can be wiped off first) is taken, and punched into a small disc sample with a specified area; an apparent volume V₁ of the negative electrode plate is calculated; and a true volume V₂ of the negative electrode plate is measured with reference to GB/T24586-2009, taking an inert gas (for example, helium or nitrogen) as a medium and using a gas displacement method and a true density tester. Porosity of negative electrode film layer=(V₁-V₂)/V₁×100%. A plurality of (for example, 30 pieces) negative electrode plate samples with good appearance and no powder falling from the edges can be tested, and an average value of the results is taken. This can improve the accuracy of the test results. A Micromeritics AccuPyc II 1340 true density tester may be used as a test instrument.

It should be noted that the foregoing various parameter tests for the negative electrode active material or the negative electrode film layer can be performed by taking a sample from prepared secondary batteries according to the following steps.

A secondary battery is discharged (for safety, the secondary battery is generally fully discharged) d; after the secondary battery is disassembled, a negative electrode plate is taken out and soaked in dimethyl carbonate for a specified period of time (for example, 2 h to 10 h); then the negative electrode plate is taken out and dried at a specified temperature for a specified time (for example at 60°C for more than 4 h); and the negative electrode plate is taken out after drying. At that point, a sample is taken from the dried negative electrode plate for testing the relevant various parameters of the negative electrode film layer, for example, the surface density, the compacted density, and the porosity of the negative electrode film layer.

The dried negative electrode plate is baked at a specified temperature for a specified time (for example at 400°C for more than 2 h); a region is randomly selected from the baked negative electrode plate; the negative electrode active material is sampled (a blade may be used to scrape the powder for sampling); and the collected negative electrode active material is sieved (for example, a 200-mesh sieve is used for sieving), to ultimately obtain a sample that can be used to test the foregoing various parameters of the negative electrode active material.

### [Positive electrode plate]

In some embodiments, the positive electrode plate includes a positive electrode current collector and a positive electrode film layer disposed on at least one surface of the positive electrode current collector. For example, the positive electrode current collector has two opposite surfaces in its thickness direction, and the positive electrode film layer is disposed on either or both of the two opposite surfaces of the positive electrode current collector.

The positive electrode current collector may be a metal foil or a composite current collector. For example, an aluminum foil may be used as the metal foil. The composite current collector may include a polymer material matrix and a metal layer formed on at least one surface of the polymer material matrix. For example, the metal material may include one or more of aluminum, aluminum alloy, nickel, nickel alloy, titanium, titanium alloy, silver, and silver alloy. For example, the polymer material matrix may include one or more of polypropylene (PP), polyethylene terephthalate (PET), polybutylene terephthalate (PBT), polystyrene (PS), and polyethylene (PE).

The positive electrode film layer typically includes a positive electrode active material, an optional binder, and an optional conductive agent. The positive electrode film layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components in a solvent and stirring them to uniformity. The solvent may be but is not limited to N-methylpyrrolidone (NMP). For example, the binder for the positive electrode film layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. For example, the conductive agent for the positive electrode film layer includes one or more of superconducting carbon, conductive graphite, acetylene black, carbon black, Ketjen black, carbon dots, carbon nanotubes, graphene, and carbon nanofiber.

The positive electrode active material may be a positive electrode active material for secondary batteries well known in the art.

When the secondary battery in this application is a lithium-ion battery, the positive electrode active material may include but is not limited to one or more of lithium transition metal oxide, lithium-containing phosphate, and respective modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphate may include but are not limited to one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof.

In some embodiments, to further increase the energy density of the secondary battery, the positive electrode active material for lithium-ion batteries may include one or more of a layered lithium transition metal oxide represented by a general formula of LiₐNi_{b}Co_{c}MₐM'ₑO_{f}A_{g} and a modified compound thereof, where 0.8≤a≤1.2; 0.6≤b<1; 0<c<1; 0<d<1; 0≤e≤ 0.1; 1≤f ≤2; 0≤g≤1; M includes Mn and/or Al; M' includes one or more of Zr, Mn, Al, Zn, Cu, Cr, Mg, Fe, V, Ti, and B; and A includes one or more of N, F, S, and Cl. Optionally, 0.65≤b<1.

In some embodiments, for example, the positive electrode active material for lithium-ion batteries may include one or more of LiCoO₂, LiNiO₂, LiMnO₂, LiMn₂O₄, LiNi_{1/3}Co_{1 /3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, and LiMnPO₄.

The modified compounds of the foregoing positive electrode active materials may be modified by doping and/or surface coating on the positive electrode active materials.

### [Electrolyte]

In some embodiments, the electrolyte is an electrolyte solution, and the electrolyte solution includes an electrolytic salt and a solvent.

The electrolytic salt is not limited to any specific type, and can be selected based on actual needs.

When the secondary battery in this application is a lithium-ion battery, for example, the electrolytic salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethane)sulfonimide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro bis(oxalato)phosphate (LiDFOP), and lithium tetrafluoro oxalato phosphate (LiTFOP).

The solvent is not limited to any specific type, and can be selected based on actual needs. In some embodiments, for example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methanesulfonate (EMS), and ethyl sulfonylethane (ESE).

In some embodiments, the electrolyte solution further optionally includes an additive. For example, the additive may include a negative electrode film-forming additive, may include a positive electrode film-forming additive, or may include an additive capable of improving some performance of the secondary battery, for example, an additive for improving overcharge performance of the secondary battery, an additive for improving high-temperature performance of the secondary battery, or an additive for improving low-temperature power performance of the secondary battery.

### [Separator]

The separator is not limited to any particular type in this application, and may be any well-known porous separator with good chemical stability and mechanical stability.

In some embodiments, material of the separator may include one or more of glass fiber, non-woven fabric, polyethylene, polypropylene, and polyvinylidene fluoride. The separator may be a single-layer film or a multi-layer composite film. When the separator is a multi-layer composite film, all layers may be made of the same or different materials.

In some embodiments, the positive electrode plate, the separator, and the negative electrode plate may be made into an electrode assembly through winding or lamination.

In some embodiments, the secondary battery may include an outer package. The outer package may be used for packaging the foregoing electrode assembly and electrolyte.

In some embodiments, the outer package may be a hard shell, for example, a hard plastic shell, an aluminum shell, or a steel shell. The outer package may alternatively be a soft package, for example, a soft bag. Material of the soft package may be plastic, for example, one or more of polypropylene (PP), polybutylene terephthalate (PBT), and polybutylene succinate (PBS).

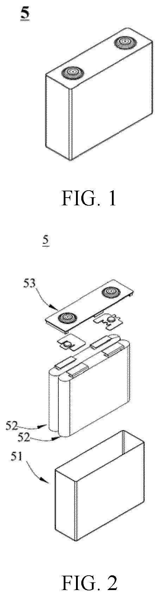

The secondary battery is not limited to any particular type in this application, and may be cylindrical, rectangular, or of any other shape. FIG. 1 shows a secondary battery 5 of a rectangular structure as an example.

In some embodiments, as shown in FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 is configured to cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte solution infiltrates the electrode assembly 52. There may be one or more electrode assemblies 52 in the secondary battery 5, and the quantity may be adjusted as required.

The preparation method of the secondary battery in this application is well known. In some embodiments, a positive electrode plate, a separator, a negative electrode plate, and an electrolyte solution may be assembled into a secondary battery. For example, the positive electrode plate, the separator, and the negative electrode plate may be made into an electrode assembly through winding or lamination; the electrode assembly is placed into an outer package and dried; and the electrolyte solution is injected, followed by processes such as vacuum packaging, standing, formation, and shaping, to obtain the secondary battery.

In some embodiments of this application, such secondary batteries of this application may be assembled into a battery module. The battery module may include a plurality of secondary batteries whose specific quantity may be adjusted based on application and capacity of the battery module.

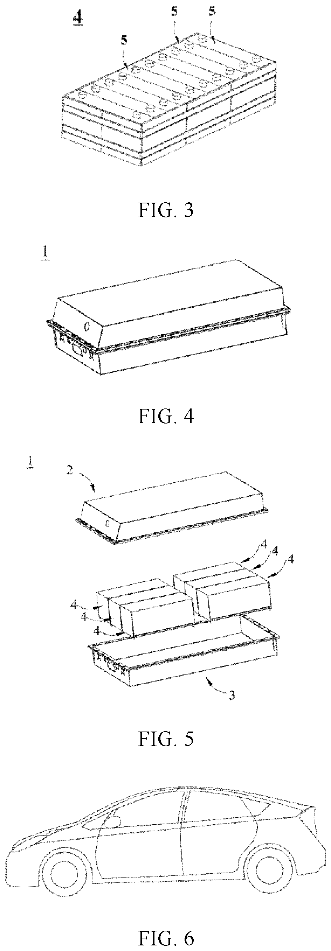

FIG. 3 is a schematic diagram of a battery module 4 as an example. As shown in FIG. 3, in the battery module 4, a plurality of secondary batteries 5 may be sequentially arranged along a length direction of the battery module 4. Certainly, the batteries may alternatively be arranged in any other manners. Further, the plurality of secondary batteries 5 may be fastened by using fasteners.

Optionally, the battery module 4 may further include a housing with an accommodating space, and the plurality of secondary batteries 5 are accommodated in the accommodating space.

In some embodiments, the battery modules may be further assembled into a battery pack, and a quantity of battery modules included in the battery pack may be adjusted based on application and capacity of the battery pack.

FIG. 4 and FIG. 5 are schematic diagrams of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3. The upper box body 2 is configured to be engaged with the lower box body 3 to form an enclosed space for accommodating the battery modules 4. The plurality of battery modules 4 may be arranged in the battery box in any manner.

An embodiment of this application further provides an electric apparatus. The electric apparatus includes at least one of the secondary battery, the battery module, or the battery pack in this application. The secondary battery, battery module, or battery pack may be used as a power source for the electric apparatus or an energy storage unit of the electric apparatus. The electric apparatus may be but is not limited to a mobile device (for example, a mobile phone, a tablet computer, or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The secondary battery, the battery module, or the battery pack may be selected for the electric apparatus based on requirements for using the electric apparatus.

FIG. 6 is a schematic diagram of an electric apparatus as an example. This electric apparatus is a battery electric vehicle, a hybrid electric vehicle, a plug-in hybrid electric vehicle, or the like. To satisfy requirements of the electric apparatus for high power and high energy density, a battery pack or a battery module may be used.

In another example, the electric apparatus may be a mobile phone, a tablet computer, a notebook computer, or the like. Such electric apparatus is generally required to be light and thin and may use a secondary battery as a power source.

### Examples

Content disclosed in this application is described in more details in the following examples. These examples are merely intended for illustrative purposes because various modifications and changes made without departing from the scope of the content disclosed in this application are apparent to persons skilled in the art. Unless otherwise stated, all parts, percentages, and ratios reported in the following examples are based on mass, all reagents used in the examples are commercially available or synthesized in a conventional manner, and can be used directly without further treatment, and all instruments used in the examples are commercially available.

The carbon-based materials of Comparative Example 1 and Comparative Example 3 were both primary particles, which were commercially available or prepared by the following method: petroleum coke was crushed, shaped, and graphitized at a temperature within a range of 2800°C to 3200°C, to obtain a carbon-based material after sieving.

In the following examples and Comparative Example 2, the carbon-based materials were commercially available or prepared by the following method: petroleum coke was crushed, shaped, mixed with a binder asphalt, and graphitized at a temperature within a range of 2800°C to 3200°C, to obtain a carbon-based material after sieving. Quantity percentages of primary particles and secondary particles could be adjusted by adjusting preparation process parameters (for example, shaping process, granulation process, and type and amount of the asphalt added).

In the following examples and comparative examples, carbon coating layers on the surfaces of the carbon-based materials could be formed through carbonization after the foregoing graphitized material was mixed with petroleum asphalt.

The silicon-based materials of Comparative Example 1 and Comparative Example 2 were both primary particles, which were commercially available.

In the following examples and Comparative Example 3, the silicon-based materials including secondary particles were commercially available or prepared by the following method: the silicon-based material including primary particles was mixed with a binder asphalt, followed by thermal treatment. A quantity percentage of the secondary particles was adjusted by adjusting preparation parameters (for example, granulation process, and type and amount of the asphalt added). Alternatively, quantity percentages of the primary particles and the secondary particles were adjusted by adjusting a mixing ratio of the silicon-based material including the primary particles (commercially available) and the silicon-based material including the secondary particles (commercially available).

In the following examples and comparative examples, a carbon coating layer on a surface of a silicon oxide with pre-intercalated lithium could be formed using a chemical vapor deposition method.

### Secondary batteries of Examples 1 to 22 and Comparative Examples 1 to 3 were all prepared according to the following method.

A negative electrode active material (a mixture of a carbon-based material and a silicon-based material, as shown in Table 1), a conductive agent carbon black (Super P), carbon nanotubes (CNTs), a binder styrene-butadiene rubber, and a thickener sodium carboxymethyl cellulose at a weight ratio of 96.2:0.7:0.1:1.8:1.2 were fully stirred and mixed in a proper amount of solvent deionized water, to form a negative electrode slurry. The negative electrode slurry was applied onto two surfaces of a negative electrode current collector copper foil, followed by drying and cold pressing, to obtain a negative electrode plate. A porosity of a single side of the negative electrode film layer was 25%, a compacted density was 1.65 g/cm³, and a surface density was 9 mg/cm². A sum of the quantity percentage of the secondary particles in the carbon-based material and the quantity percentage of the primary particles in the carbon-based material was 100%, and a sum of the quantity percentage of the secondary particles in the silicon-based material and the quantity percentage of the primary particles in the silicon-based material was 100%. Therefore, the quantity percentage of the secondary particles or the quantity percentage of the primary particles could be calculated based on the quantity percentage of the primary particles or the quantity percentage of the secondary particles in Table 1.

LiNi_{0.8}Co_{0.1}Mn_{0.1}O₂ (NCM811), a conductive agent Super P, and a binder polyvinylidene fluoride were mixed at a weight ratio of 96.5:1.5:2, added with a proper amount of NMP, and well stirred to obtain a positive electrode slurry. The positive electrode slurry was applied onto two surfaces of a positive electrode current collector aluminum foil, followed by drying and cold pressing, to obtain a positive electrode plate.

Ethylene carbonate (EC), ethyl methyl carbonate (EMC), and diethyl carbonate (DEC) were mixed at a volume ratio of 1:1:1 to obtain an organic solvent, and then LiPF₆ was dissolved in the organic solvent to prepare an electrolyte solution with a concentration of 1 mol/L.

A PP/PE composite film was used as a separator. The separator and the foregoing prepared positive electrode plate and negative electrode plate were sequentially placed, with the separator being disposed between the positive electrode plate and the negative electrode plate for separation, and then the resulting stack was wound to obtain an electrode assembly; the electrode assembly was placed in an outer package and dried; and then the electrolyte solution was injected, followed by processes such as vacuum packaging, standing, formation, and ageing to obtain a secondary battery.

### Performance test

### (1) Rate performance test for secondary battery

At 25°C, the foregoing prepared secondary battery was constant-current discharged to 2.8 V at a rate of 1C. Then, the secondary battery was constant-current charged to 4.3 V at a rate of 1C, and continued to be constant-voltage charged to a current of 0.05C. At that point, the secondary battery was in a fully charged state. After left standing for 5 minutes, the fully charged secondary battery was constant-current discharged to 2.8 V at a rate of 0.33C and a rate of 3C respectively, and discharge capacities of the secondary battery at 0.33C and 3C were recorded respectively. A ratio of the discharge capacity of the secondary battery at 3C to the discharge capacity of the secondary battery at 0.33C represented the rate performance of the secondary battery.

### (2) Direct-current resistance rest for secondary battery

At 25°C, the foregoing prepared secondary battery was constant-current charged to 4.3 V at 1C, constant-voltage charged to a current of 0.05C, and constant-current discharged at 0.5C for 30 min, so that the secondary battery was adjusted to 50% SOC. At that point, a voltage of the secondary battery was recorded as U₁, then the secondary battery was discharged at 3C for 30 seconds, a voltage after the secondary battery was discharged was recorded as U₂, and a discharge current was discharged as I₁. Therefore, direct-current resistance (DCR) of secondary battery=(U₁-U₂)/I₁.

### (3) Cycling performance test for secondary battery

At 45°C, the foregoing prepared secondary battery was charged to 4.3 V at a constant current of 1C, then constant-voltage charged to a current of 0.05C, left standing for 5 min, and then discharged to 2.8 V at a constant current of 1C, and a discharge capacity at that point was recorded as a discharge capacity at the first cycle. The secondary battery was subjected to a cyclic charge and discharge test according to the foregoing method, and a discharge capacity after each cycle was recorded. Capacity retention rate (%) of secondary battery after 300 cycles at 45°C=discharge capacity after 300 cycles/discharge capacity at first cycle×100%

From the comprehensive test results in Table 1, it can be seen that when the carbon-based material and the silicon-based material both include secondary particles formed by aggregation of primary particles, the secondary battery can achieve both low direct-current resistance and good rate performance and high-temperature cycling performance.

From the comprehensive test results in Table 1, it can also be seen that further adjusting the quantity percentage of the secondary particles in the carbon-based material and/or silicon-based material to be within a proper range can help the secondary battery to achieve both better rate performance and better high-temperature cycling performance.

It should be noted that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

**Table 1**

| No. | Carbon-based material | | | | | | Silicon-based material | | | | | | Performance of secondary battery | | |
|---|---|---|---|---|---|---|---|---|---|---|---|---|---|---|---|
| | Type | Carbon coating layer | Quantity percentage of secondary particles | Dᵥ50 (µm) | Dᵥ90 (µm) | Mass percentage | Type | Carbon coating layer | Quantity percentage of secondary particles | Dᵥ50 (µm) | Dᵥ90 (µm) | Mass percentage | Discharge capacity at 3C/discharge capacity at 0.33C | Direct-current resistance at 25°C (mΩ) | Capacity retention rate after 300 cycles at 45°C |
| Example 1 | Artificial graphite | Yes | 80% | 15 | 25 | 90% | Silicon oxide with pre-intercalated lithium | Yes | 70% | 11 | 19 | 10% | 83.60% | 655 | 95.70% |
| Example 2 | Artificial graphite | Yes | 85% | 15 | 25 | 90% | Silicon oxide with pre-intercalated lithium | Yes | 70% | 11 | 19 | 10% | 85.10% | 642 | 95.10% |
| Example 3 | Artificial graphite | Yes | 90% | 15 | 25 | 90% | Silicon oxide with pre-intercalated lithium | Yes | 70% | 11 | 19 | 10% | 87.30% | 610 | 94.50% |
| Example 4 | Artificial graphite | Yes | 75% | 15 | 25 | 90% | Silicon oxide with pre-intercalated lithium | Yes | 70% | 11 | 19 | 10% | 82.30% | 667 | 96.10% |
| Example 5 | Artificial graphite | Yes | 72% | 15 | 25 | 90% | Silicon oxide with pre-intercalated lithium | Yes | 70% | 11 | 19 | 10% | 81.50% | 673 | 96.30% |
| Example 6 | Artificial graphite | Yes | 50% | 15 | 25 | 90% | Silicon oxide with pre-intercalated lithium | Yes | 70% | 11 | 19 | 10% | 79.20% | 723 | 89.90% |
| Example 7 | Artificial graphite | Yes | 20% | 15 | 25 | 90% | Silicon oxide with pre-intercalated lithium | Yes | 30% | 11 | 19 | 10% | 77.80% | 736 | 89.20% |
| Example 8 | Artificial graphite | Yes | 80% | 15 | 25 | 90% | Silicon oxide with pre-intercalated lithium | Yes | 55% | 11 | 19 | 10% | 81.30% | 682 | 96.40% |
| Example 9 | Artificial graphite | Yes | 80% | 15 | 25 | 90% | Silicon oxide with pre-intercalated lithium | Yes | 65% | 11 | 19 | 10% | 82.50% | 663 | 96.20% |
| Example 10 | Artificial graphite | Yes | 80% | 15 | 25 | 90% | Silicon oxide with pre-intercalated lithium | Yes | 75% | 11 | 19 | 10% | 85.20% | 632 | 94.20% |
| Example 11 | Artificial graphite | Yes | 80% | 15 | 25 | 90% | Silicon oxide with pre-intercalated lithium | Yes | 90% | 11 | 19 | 10% | 87.10% | 619 | 89.50% |
| Example 12 | Artificial graphite | Yes | 80% | 15 | 25 | 98% | Silicon oxide with pre-intercalated lithium | Yes | 70% | 11 | 19 | 2% | 80.30% | 691 | 97.70% |
| Example 13 | Artificial graphite | Yes | 80% | 15 | 25 | 80% | Silicon oxide with pre-intercalated lithium | Yes | 70% | 11 | 19 | 20% | 86.50% | 623 | 93.30% |
| Example 14 | Artificial graphite | Yes | 80% | 15 | 25 | 60% | Silicon oxide with pre-intercalated lithium | Yes | 70% | 11 | 19 | 40% | 88.30% | 602 | 91.50% |
| Example 15 | Artificial graphite | Yes | 80% | 15 | 25 | 50% | Silicon oxide with pre-intercalated lithium | Yes | 70% | 11 | 19 | 50% | 89.60% | 586 | 86.20% |
| Example 16 | Artificial graphite | Yes | 80% | 17 | 26 | 90% | Silicon oxide with pre-intercalated lithium | Yes | 70% | 13 | 22 | 10% | 82.80% | 682 | 96.30% |
| Example 17 | Artificial graphite | Yes | 80% | 13 | 23 | 90% | Silicon oxide with pre-intercalated lithium | Yes | 70% | 10. | 17 | 10% | 85.40% | 627 | 94.80% |
| Example 18 | Artificial graphite | Yes | 80% | 12 | 20 | 90% | Silicon oxide with pre-intercalated lithium | Yes | 70% | 15 | 24 | 10% | 78.10% | 705 | 87.20% |
| Example 19 | Artificial graphite | No | 80% | 15 | 25 | 90% | Silicon oxide with pre-intercalated lithium | Yes | 70% | 11 | 19 | 10% | 78.50% | 683 | 95.90% |
| Example 20 | Artificial graphite | Yes | 80% | 15 | 25 | 90% | Silicon oxide with pre-intercalated lithium | No | 70% | 11 | 19 | 10% | 81.70% | 676 | 96.10% |
| Example 21 | Artificial graphite | No | 80% | 15 | 25 | 90% | Silicon oxide with pre-intercalated lithium | No | 70% | 11 | 19 | 10% | 76.30% | 711 | 96.20% |
| Example 22 | Artificial graphite | Yes | 80% | 15 | 25 | 90% | Silicon-carbon material | No | 70% | 11 | 19 | 10% | 80.80% | 724 | 97.60% |
| Comparative Example 1 | Artificial graphite | Yes | 0% | 15 | 25 | 90% | Silicon oxide with pre-intercalated lithium | Yes | 0% | 11 | 19 | 10% | 73.80% | 784 | 87.20% |
| Comparative Example 2 | Artificial graphite | Yes | 80% | 15 | 25 | 90% | Silicon oxide with pre-intercalated lithium | Yes | 0% | 11 | 19 | 10% | 76.40% | 746 | 86.90% |
| Comparative Example 3 | Artificial graphite | Yes | 0% | 15 | 25 | 90% | Silicon oxide with pre-intercalated lithium | Yes | 70% | 11 | 19 | 10% | 75.80% | 750 | 87.00% |

## Claims

1. A secondary battery, comprising a negative electrode plate, wherein the negative electrode plate comprises a negative electrode current collector, and a negative electrode film layer that is provided on at least one surface of the negative electrode current collector and comprises a negative electrode active material; the negative electrode active material comprises a carbon-based material and a silicon-based material; the carbon-based material comprises secondary particles formed by aggregation of primary particles; and the silicon-based material comprises secondary particles formed by aggregation of primary particles.

2. The secondary battery according to claim 1, wherein a particle size by volume Dᵥ50 of the carbon-based material is greater than a particle size by volume Dᵥ50 of the silicon-based material.

3. The secondary battery according to claim 1 or 2, wherein a quantity percentage of the secondary particles in the carbon-based material is greater than a quantity percentage of the secondary particles in the silicon-based material.

4. The secondary battery according to any one of claims 1 to 3, wherein
the quantity percentage of the secondary particles in the carbon-based material is ≥ 70%, optionally 75% to 90%; and/or
the quantity percentage of the secondary particles in the silicon-based material is ≥ 55%, optionally 60% to 85%.

5. The secondary battery according to any one of claims 1 to 4, wherein a porosity of the silicon-based material comprising the secondary particles is ≥ 4%, optionally 5% to 20%.

6. The secondary battery according to any one of claims 1 to 5, wherein the particle size by volume Dᵥ50 of the carbon-based material is 12 µm to 18 µm, optionally 13 µm to 17 µm.

7. The secondary battery according to any one of claims 1 to 6, wherein the carbon-based material satisfies at least one of the following (1) to (8):
(1) a particle size by volume Dᵥ90 of the carbon-based material is 20 µm to 26 µm, optionally 21 µm to 25 µm;
(2) the carbon-based material satisfies that (Dᵥ90-Dᵥ10)/Dᵥ50 is 0.6 to 1.5, optionally 0.9 to 1.3;
(3) a specific surface area of the carbon-based material is 1.5 m²/g to 3.5 m²/g, optionally 1.7 m²/g to 2.7 m²/g;
(4) a powder compacted density of the carbon-based material under 20000 N is 1.65 g/cm³ to 1.85 g/cm³, optionally 1.70 g/cm³ to 1.80 g/cm³;
(5) a tap density of the carbon-based material is 0.9 g/cm³ to 1.2 g/cm³, optionally 0.9 g/cm³ to 1.1 g/cm³;
(6) a graphitization degree of the carbon-based material is ≥ 92%, optionally 93% to 94%;
(7) a gram capacity of the carbon-based material is ≥ 354 mAh/g, optionally 355 mAh/g to 360 mAh/g; and
(8) a powder OI value of the carbon-based material is 2 to 10, optionally 3 to 6.

8. The secondary battery according to any one of claims 1 to 7, wherein the silicon-based material satisfies at least one of the following (1) to (7):
(1) a particle size by volume Dᵥ50 of the silicon-based material is 8 µm to 15 µm, optionally 10 µm to 13 µm;
(2) a particle size by volume Dᵥ90 of the silicon-based material is 15 µm to 25 µm, optionally 16 µm to 24 µm;
(3) the silicon-based material satisfies that (Dᵥ90-Dᵥ10)/Dᵥ50 is 0.7 to 1.5, optionally 0.9 to 1.3;
(4) a specific surface area of the silicon-based material is 0.7 m²/g to 2.0 m²/g, optionally 0.8 m²/g to 1.6 m²/g;
(5) a powder compacted density of the silicon-based material under 50000 N is 1.0 g/cm³ to 1.7 g/cm³, optionally 1.2 g/cm³ to 1.6 g/cm³;
(6) a tap density of the silicon-based material is 1.0 g/cm³ to 1.5 g/cm³, optionally 1.1 g/cm³ to 1.4 g/cm³; and
(7) a powder resistivity of the silicon-based material under 4 MPa is ≤ 15 Ω•cm, optionally 0.5 Ω•cm to 12 Ω•cm.

9. The secondary battery according to any one of claims 1 to 8, wherein the carbon-based material comprising the secondary particles comprises artificial graphite.

10. The secondary battery according to any one of claims 1 to 9, wherein the silicon-based material comprises one or more of elemental silicon, silicon oxide, silicon-carbon material, and silicon alloy material.

11. The secondary battery according to any one of claims 1 to 10, wherein the silicon-based material comprises secondary particles formed by aggregation of at least one of the following primary particles (1) to (5):
(1) primary particles of a silicon-oxygen material containing no alkali metal and no alkaline earth metal;
(2) primary particles of a silicon-oxygen material containing alkali metal or alkaline earth metal;
(3) primary particles of a silicon-carbon material;
(4) primary particles of elemental silicon; and
(5) primary particles of silicon alloy.

12. The secondary battery according to any one of claims 1 to 11, wherein a carbon coating layer is provided on a surface of the carbon-based material or silicon-based material; and optionally, the carbon coating layer is provided on both the surface of the carbon-based material and the surface of the silicon-based material.

13. The secondary battery according to any one of claims 1 to 12, wherein the carbon coating layer is provided on the surface of the carbon-based material, and the carbon coating layer comprises hard carbon.

14. The secondary battery according to any one of claims 1 to 13, wherein the carbon-based material further comprises primary particles; and optionally, a quantity percentage of the secondary particles in the carbon-based material is greater than a quantity percentage of the primary particles in the carbon-based material.

15. The secondary battery according to any one of claims 1 to 14, wherein the carbon-based material further comprises primary particles, and the carbon-based material comprising the primary particles comprises at least one of artificial graphite and natural graphite.

16. The secondary battery according to any one of claims 1 to 15, wherein the silicon-based material further comprises primary particles; and optionally, a quantity percentage of the secondary particles in the silicon-based material is greater than a quantity percentage of the primary particles in the silicon-based material.

17. The secondary battery according to any one of claims 1 to 16, wherein a mass percentage of the silicon-based material in the negative electrode active material is ≤ 50%, optionally 2% to 40%.

18. The secondary battery according to any one of claims 1 to 17, wherein the negative electrode active material satisfies at least one of the following (1) to (3):
(1) a particle size by volume Dᵥ50 of the negative electrode active material is 10 µm to 17.5 µm, optionally 12 µm to 17 µm;
(2) a particle size by volume Dᵥ90 of the negative electrode active material is 18 µm to 25.5 µm, optionally 19 µm to 24.5 µm; and
(3) the negative electrode active material satisfies that (Dᵥ90-Dᵥ10)/Dᵥ50 is 0.65 to 1.5, optionally 0.9 to 1.3.

19. The secondary battery according to any one of claims 1 to 18, wherein the negative electrode film layer satisfies at least one of the following (1) to (3):
(1) a porosity of the negative electrode film layer is ≥ 15%, optionally 18% to 50%;
(2) a compacted density of the negative electrode film layer is ≤ 1.75 g/cm³, optionally 1.30 g/cm³ to 1.60 g/cm³; and
(3) a surface density of the negative electrode film layer is 10.4 mg/cm², optionally 5 mg/cm² to 9 mg/cm².

20. The secondary battery according to any one of claims 1 to 19, wherein the secondary battery comprises a positive electrode plate, the positive electrode plate comprises a positive electrode active material, and the positive electrode active material comprises one or more of a layered lithium transition metal oxide represented by a general formula of LiₐNi_{b}Co_{c}M_{d}M'ₑO_{f}A_{g} and a modified compound thereof, wherein 0.8≤a≤1.2; 0.6≤b< 1; 0<c< 1; 0 <d<1; 0≤e≤ 0.1; 1≤f≤2; 0≤g≤1; M comprises Mn and/or Al; M' comprises one or more of Zr, Mn, Al, Zn, Cu, Cr, Mg, Fe, V, Ti, and B; A comprises one or more of N, F, S, and Cl; and optionally, 0.65≤b< 1.

21. An electric apparatus, comprising the secondary battery according to any one of claims 1 to 20.
